# EUROPEAN PATENT APPLICATION

(11) **EP 4 693 057 A2**
(43) Date of publication of application: **11.02.2026**
(21) Application number: 25219077.2
(22) Date of filing: 27.11.2025
(51) Int. Cl.: G06F 13/42, G06F 15/17

(54) **DATA TRANSMISSION SYSTEM AND METHOD, MEDIUM, DEVICE, AND CHIP**

(30) Priority: 28.05.2025 CN 202510704277
(71) Applicant: Beijing Horizon Information Technology Co., Ltd., Beijing 100094 (CN)
(72) Inventor: QU, Xinyuan, Beijing, 100094 (CN)
(74) Representative: V.O.

(57) **Abstract**

Embodiments of this disclosure disclose a data transmission system and method, a medium, a device, and a chip. An apparatus includes: a processor; and at least two processing elements, which are interconnected to form an interconnection network. The processor is configured to configure first transmission control information to a first processing element that serves as a source device, and configure second transmission control information to a second processing element that serves as a destination device. The first processing element is configured to: when serving as the source device, determine a to-be-transmitted first data packet based on the first transmission control information, and transmit the first data packet to the second processing element through the interconnection network. The second processing element is configured to: when serving as the destination device, store at least a part of data in the first data packet based on the second transmission control information.

## Description

### FIELD OF THE INVENTION

This disclosure relates to technologies of on-chip interconnection networks, and in particular, to a data transmission system and method, a medium, a device, and a chip.

### BACKGROUND OF THE INVENTION

In an on-chip interconnection network, data transmission of multicasting and broadcasting are usually required, such as writing data in an internal memory of a device (referred to as a source device) in a topology structure of the interconnection network into internal memories of a plurality of or all other devices (referred to as destination devices). Data transmission from one source device to a plurality of destination devices is referred to as multicasting, and data transmission from one source device to all destination devices is referred to as broadcasting. In related technologies, usually the source device specifies that the destination devices use a unified write port and write transmitted data into the internal memories of the destination devices. When the destination devices include a plurality of write ports, specifying a unified write port needs to constrain the destination devices to use write ports with a same identifier. This may reduce use efficiency of the write ports, and thus reducing transmission efficiency of the on-chip interconnection network.

### SUMMARY OF THE INVENTION

Embodiments of this disclosure disclose a data transmission system and method, a medium, a device, and a chip, to improve use efficiency of write ports, thereby improving transmission efficiency of an on-chip interconnection network.

According to a first aspect of an embodiment of this disclosure, a data transmission system is provided, including: a processor; and at least two processing elements, which are interconnected to form an interconnection network. The processor is configured to configure first transmission control information to a first processing element in the at least two processing elements that serves as a source device, and configure second transmission control information to a second processing element in the at least two processing elements that serves as a destination device. The first processing element is configured to: when serving as the source device, determine a to-be-transmitted first data packet based on the first transmission control information from the processor, and transmit the first data packet to the second processing element through the interconnection network. The second processing element is configured to: when serving as the destination device, store at least a part of data in the first data packet based on the second transmission control information from the processor.

According to a second aspect of an embodiment of this disclosure, a data transmission method is provided, including: configuring, by a processor, first transmission control information to a first processing element in at least two processing elements that serves as a source device, and second transmission control information to a second processing element in the at least two processing elements that serves as a destination device, wherein the at least two processing elements are interconnected to form an interconnection network; determining, by the first processing element, a to-be-transmitted first data packet based on the first transmission control information, and transmitting the first data packet to the second processing element through the interconnection network; and storing, by the second processing element, at least a part of data in the first data packet based on the second transmission control information.

According to a third aspect of an embodiment of this disclosure, a computer readable storage medium is provided. The storage medium stores a computer program, and the computer program is executed by a processor to implement the data transmission method according to any one of the foregoing embodiments of this disclosure.

According to a fourth aspect of an embodiment of this disclosure, an electronic device is provided. The electronic device includes: a processor; and a memory configured to store processor-executable instructions. The processor is configured to read the executable instructions from the memory, and execute the instructions to implement the data transmission method according to any one of the foregoing embodiments of this disclosure. Alternatively, the electronic device includes the data transmission system according to any one of the foregoing embodiments of this disclosure.

According to a fifth aspect of an embodiment of this disclosure, a computer program product is provided. When instructions in the computer program product are executed by a processor, the data transmission method according to any one of the foregoing embodiments of this disclosure is implemented.

According to a sixth aspect of an embodiment of this disclosure, a chip is provided, including the data transmission system according to any one of the foregoing embodiments of this disclosure.

According to the data transmission system and method, the medium, the device, and the chip that are provided in the foregoing embodiments of this disclosure, the processor configures the first transmission control information to the first processing element that serves as the source device, so that the first processing element that serves as the source device can determine the to-be-transmitted first data packet based on the first transmission control information, and transmit the first data packet to the second processing element that serves as the destination device through the interconnection network. The processor configures the second transmission control information to the second processing element, so that the second processing element can perform data storage based on the second transmission control information. Moreover, the source device in this disclosure is not required to consider a write port of the destination device. Therefore, a situation where data transmission can be performed merely when the source device specifies that destination devices use a unified write port, so as to avoid waiting for a plurality of destination devices to have idle unified ports during multicasting or broadcasting. This can effectively reduce waiting time, thereby improving use efficiency of the write port, and improving transmission efficiency of an on-chip interconnection network.

### BRIEF DESCRIPTION OF THE DRAWINGS

FIG. 1 is an exemplary application scenario of a data transmission system according to this disclosure;
FIG. 2 is a schematic diagram of structure of a data transmission system according to an exemplary embodiment of this disclosure;
FIG. 3 is a schematic diagram of a structure of a first processing element according to an exemplary embodiment of this disclosure;
FIG. 4 is a schematic diagram of a structure of a first processing element according to another exemplary embodiment of this disclosure;
FIG. 5 is a schematic diagram of a structure of a second processing element according to an exemplary embodiment of this disclosure;
FIG. 6 is a schematic diagram of a structure of a second processing element according to another exemplary embodiment of this disclosure;
FIG. 7 is a schematic diagram of a structure of a processing element according to an exemplary embodiment of this disclosure;
FIG. 8 is a schematic diagram of a structure of a data transmission system according to another exemplary embodiment of this disclosure;
FIG. 9 is a schematic flowchart of a data transmission method according to an exemplary embodiment of this disclosure;
FIG. 10 is a schematic flowchart of a data transmission method according to another exemplary embodiment of this disclosure;
FIG. 11 is a schematic flowchart of a data transmission method according to still another exemplary embodiment of this disclosure;
FIG. 12 is a schematic flowchart of a data transmission method according to yet another exemplary embodiment of this disclosure;
FIG. 13 is a schematic flowchart of a data transmission method according to still yet another exemplary embodiment of this disclosure;
FIG. 14 is a schematic flowchart of a data transmission method according to a further exemplary embodiment of this disclosure; and
FIG. 15 is a diagram of a structure of an electronic device according to an embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that in an on-chip interconnection network, data transmission of multicasting and broadcasting are usually required, such as writing data in an internal memory of a device (referred to as a source device) in a topology structure of the interconnection network into internal memories of a plurality of or all other devices (referred to as destination devices). Data transmission from one source device to a plurality of destination devices is referred to as multicasting, and data transmission from one source device to all destination devices is referred to as broadcasting. In related technologies, usually the source device specifies that the destination devices use a unified write port and write transmitted data into the internal memories of the destination devices. For example, each device that can serve as a destination device has a write port 0 and a write port 1, where 0 and 1 represent identifiers of the write ports. In a data transmission scenario, a device A, as a source device, needs to multicast data to devices B and C that serve as destination devices. If the write port 0 of the device B is in an idle status and the write port 1 of the device B is in an occupied status, while the write port 0 of the device C is in the occupied status and the write port 1 of the device C is in the idle status, although current statuses of the write port 0 of the device B and the write port 1 of the device C can support simultaneous data writing, the transmission task cannot be executed due to inconsistent identifiers of the write ports. However, it is needed to wait for the write port 0 of the device B and the write port 0 of the device C to be in the idle status at same time, or for the write port 1 of the device B and the write port 1 of the device C to be in the idle status at same time, so as to execute the transmission task. This data transmission manner of specifying a unified write port needs to restrict the destination devices to use write ports with a same identifier, resulting in lower utilization of the write ports of the destination devices and increased waiting time for the transmission task. Thus, transmission efficiency of the on-chip interconnection network is reduced.

### Exemplary overview

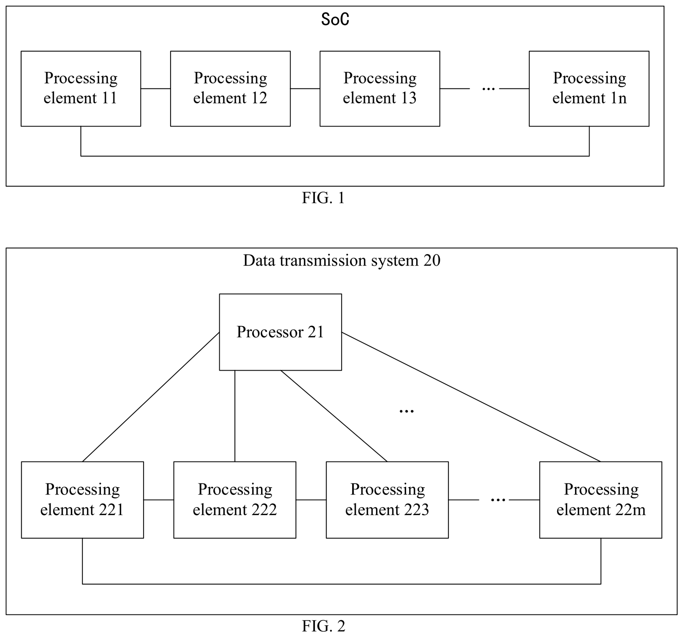

FIG. 1 is an exemplary application scenario of a data transmission system according to this disclosure. As shown in FIG. 1, a system on chip (SoC for short) includes n (n is an integer greater than 1) processing elements, which may be represented as a processing element 11, a processing element 12, ..., and a processing element In. The n processing elements are interconnected to form an interconnection network, and a specific topology structure of the interconnection network may be, for example, a circular interconnection network, a tree interconnection network, or a butterfly interconnection network, which is not specifically limited. Description is made in FIG. 1 merely by using the circular interconnection network as an example. In the interconnection network, there are data transmission requirements such as data broadcasting and data multicasting between the processing elements. In the circular interconnection network, broadcasting and multicasting may be implemented through circular data paths between the processing elements. For example, if the processing element 11 needs to multicast data to the processing element 12 and the processing element 13, to-be-transmitted data is transmitted from the processing element 11 to the processing element 12. The processing element 12 stores the data and transmits the data to the processing element 13, which stores the data. A data transmission system in this embodiment of this disclosure may be utilized to implement data transmission between the processing elements. Specifically, the data transmission system in this embodiment of this disclosure may include a processor and at least two processing elements (such as the n processing elements in FIG. 1). The processor is configured to configure first transmission control information to a first processing element in the processing elements that serves as a source device, and configure second transmission control information to a second processing element in the processing elements that serves as a destination device. The first processing element is configured to: when serving as the source device, determine a to-be-transmitted first data packet based on the first transmission control information from the processor, and transmit the first data packet to the second processing element through the interconnection network. The second processing element is configured to: when serving as the destination device, store at least a part of data in the first data packet based on the second transmission control information from the processor. The processor configures transmission control information for the source device and the destination device. The first processing element that serves as the source device can transmit data based on the first transmission control information from the processor, while the second processing element that serves as the destination device can write to-be-stored data into an internal memory in a timely manner based on the second transmission control information from the processor. Moreover, the source device is not required to consider a write port of the destination device. Therefore, a situation where data transmission can be performed merely when the source device specifies that destination devices use a unified write port, so as to avoid waiting for a plurality of destination devices to have idle unified ports during multicasting or broadcasting, which effectively reduces waiting time, thereby improving use efficiency of the write port, and improving transmission efficiency of an on-chip interconnection network.

### Exemplary system

FIG. 2 is a schematic diagram of structure of a data transmission system according to an exemplary embodiment of this disclosure. This embodiment may be applied to an electronic device or a chip. The electronic device may include a server, a terminal device, or the like. The terminal device may include, for example, an in-vehicle computing platform (or referred to as a vehicle-mounted terminal). As shown in FIG. 2, the data transmission system (which may be referred to as a data transmission device, or may be referred to a system or device for short) 20 provided in this embodiment of this disclosure includes a processor (or referred to as a first processor) 21 and at least two processing elements. The at least two processing elements may include m processing elements, where m is an integer greater than 1. The m processing elements are respectively a processing element 221, a processing element 222, a processing element 223, ..., and a processing element 22m.

The at least two processing elements are interconnected to form an interconnection network.

The processor 21 is configured to configure first transmission control information to a first processing element 22i in the at least two processing elements that serves as a source device, where i is any value among 1, 2, ..., and m; and configure second transmission control information to a second processing element 22j in the at least two processing elements that serves as a destination device, where j is any value among 1, 2, ..., and m, and is not equal to i.

The first processing element 22i is configured to: when serving as the source device, determine a to-be-transmitted first data packet based on the first transmission control information from the processor 21, and transmit the first data packet to the second processing element 22j through the interconnection network.

The second processing element 22j is configured to: when serving as the destination device, store at least a part of data in the first data packet based on the second transmission control information from the processor 21.

In some optional embodiments, the processor 21 may be a processor capable of running application programs, such as a central processing unit (CPU for short). The processing element may be any component (or referred to as a device) that requires data transmission with other devices.

In some optional embodiments, the source device refers to a device that needs to transmit data to other processing elements, that is, a processing element that represents a data source. In this disclosure, the processing element that serves as the source device is referred to as the first processing element 22i. The first transmission control information is control information used for controlling the first processing element 22i that serves as the source device to perform data transmission. The first transmission control information may include one or more of read address control information, target read port identification information, destination device identification information, transmission length information, and transmission direction information. The read address control information is control information required by the first processing element 22i to obtain read address information in to-be-transmitted data. For example, the read address control information may include data structure information and starting address information of a data block. The transmission length information refers to a total length of transmitted data. For example, if there is one or more transmitted data packets and each data packet has a fixed bit width, the transmission length information may be determined in combination with a quantity of the data packets. For example, when a bit width of a memory in the first processing element 22i is not consistent with that of the data packet, data that needs to be transmitted once may be packed into one or more data packets for transmission. The transmission direction information may be a flow direction of data on a circular data path of a circular interconnection network, such as a clockwise direction or a counterclockwise direction. Alternatively, a transmission direction may correspond to another type of interconnection networks. The target read port identification information is identification information of an idle read port specified by the processor 21 for this data transmission. Optionally, the first transmission control information may not include the target read port identification information, but is configured based on a determined target read port by the processor 21 to a configuration register corresponding to the target read port in the first processing element 22i, so that the first processing element 22i can determine the target read port based on information about the configuration register. A specific manner of specifying the target read port is not limited.

In some optional embodiments, the destination device refers to a processing element to which the to-be-transmitted data needs to be transmitted, and the destination device identification information indicates identification information of the processing element to which the to-be-transmitted data needs to be transmitted. For example, the destination device identification information is identification information representing the second processing element 22j that serves as the destination device. The second transmission control information is control information for controlling the second processing element 22j to process a data packet (that is, the first data packet) from the first processing element 22i. For example, the second transmission control information may include one or more of source device identification information, read port identification information for data reading in the source device, write address control information, the transmission length information, and the target write port identification information. The source device identification information and/or the read port identification information for data reading in the source device may be used to determine whether the second processing element 22j stores data in the first data packet, that is, to determine whether the data in the first data packet is data to be provided to the second processing element 22j for use, thereby ensuring accuracy of data transmission. The write address control information is control information required for determining write address information. For example, the write address control information may include data block structure information of to-be-written data. The transmission length information refers to a total length of transmitted data. For example, if there is one or more transmitted data packets and each data packet has a fixed bit width, the transmission length information may be determined in combination with the quantity of the data packets. The target write port identification information is identification information of a write port that is specified by the processor 21 for the second processing element for this data writing. Optionally, the second transmission control information may not include the target write port identification information, but is configured by the processor 21 to a register corresponding to the target write port.

In some optional embodiments, in intelligent driving, intelligent robots, security monitoring, and other fields involving computer vision, data transmission is required between processing elements with certain processing functions in a system on chip, such as a GPU (graphics processing unit), an NPU (neural network processing unit), a DPU (data processing unit), a TPU (tensor processing unit), and an ISP (image signal processor). These processing elements may be used as processing elements in the embodiments of this disclosure. In practical application, optionally, the CPU may also be used as a processing element in the embodiments of this disclosure. For example, for a data transmission system with a plurality of CPUs, one CPU serves as the processor 21, while the other CPUs, the GPU, and the TPU serve as processing elements. Types that may be used as processing elements are not specifically limited in this disclosure.

In some optional embodiments, the processor 21 is electrically connected to the processing elements, respectively. The at least two processing elements are interconnected to form an interconnection network, and a topology structure of the interconnection network is, for example but not limited to, a circular interconnection network, a tree interconnection network, or a butterfly interconnection network. Description is made in FIG. 2 by using an example in which a circular interconnection network is adopted between the processing elements. For example, in a scenario of intelligent driving, the processing elements of the system on chip include a perception processing element for implementing a perception processing function, a positioning processing element for implementing a positioning processing function, and a planning and control processing element for implementing a planning and control function. Data exchange is required between the processing elements. Specifically, the perception processing function refers to a function for the perception processing element to obtain a perception result through data processing based on ego vehicle data and surrounding environment data collected by sensors. The perception result may include, for example, information about perceived obstacles around the ego vehicle and/or road elements. The positioning processing function refers to a function for the positioning processing element to perform, based on the perception result, real-time positioning and other processing on the vehicle to obtain a positioning result. The planning and control function refers to a function for the planning and control processing element to perform path planning based on the perception result and the positioning result, and control a driving status of the ego vehicle according to a planned path. In some driving scenarios, the driving status of the ego vehicle needs to be transmitted to the perception processing element for subsequent perception processing by the perception processing element. In this way, the processing elements are interconnected to form a circular interconnection topology structure. It may be understood that the perception processing element, the positioning processing element, and the planning and control processing element that are described above are merely for exemplary description, and do not impose any limitation on the embodiments of this disclosure. In another practical intelligent driving scenario, it is not limited that the processing for each of perception, positioning, and planning and control corresponds to one processing element, separately. For example, at least one processing element may collaborate to implement intelligent driving functions such as perception, positioning, and planning and control. The at least one processing element may be used as the processing elements in the embodiments of this disclosure. In addition, the processing elements in the embodiments of this disclosure are not limited to the processing elements in the system on chip in the intelligent driving scenario. As long as data transmission is required between a plurality of processing elements included in hardware (or the system), data transmission can be implemented through the data transmission system provided in the embodiments of this disclosure.

In some optional embodiments, the processor 21 may determine, according to task scheduling requirements, the first processing element 22i that serves as the source device and the second processing element 22j that serves as the destination device; further determine the first transmission control information based on an operating status of the first processing element 22i, and determine the second transmission control information based on an operating status of the second processing element 22j; and then configure the first transmission control information to the first processing element 22i and configure the second transmission control information to the second processing element 22j.

In some optional embodiments, there may be one or more destination devices, that is, there may be one or more second processing elements 22j. For a case where data transmission to a plurality of destination devices is required in the data transmission system, the processor 21 may determine, based on the operating status of each second processing element 22j that serves as the destination device, the second transmission control information corresponding to that second processing element 22j, and configure the corresponding second transmission control information for that second processing element. The second transmission control information of different destination devices may be same or different. For example, if identifiers of write ports in an idle status of two second processing elements are different, where the write port in the idle status of a second processing element a is a write port 1, and the write port in the idle status of a second processing element b is a write port 2, the second transmission control information of the two second processing elements may include different target write port identification information. To be specific, the target write port identification information of the second processing element a is 1, and the target write port identification information of the second processing element b is 2. Alternatively, the second transmission control information may not include the target write port identification information. Instead, the processor 21 configures the second transmission control information of the second processing element a to a register corresponding to the write port 1 of the second processing element a, and configure the second transmission control information of the second processing element b to a register corresponding to the write port 2 of the second processing element b, so that the second processing elements can determine the target write port based on whether information in the registers corresponding to the write ports is the second transmission control information. Optionally, for the register corresponding to each write port, when the second transmission control information is not configured, the information in the register is a preset value. The information in the register may be compared with the preset value, separately. If the information in the register is not the preset value and it is determined that the second transmission control information is written, the write port corresponding to that register is the target write port.

In some optional embodiments, the processor 21 may configure the first transmission control information into the configuration register in the first processing element 22i, and configure the second transmission control information into a configuration register in the second processing element 22j.

In some optional embodiments, the first processing element 22i may read to-be-transmitted data from a local memory based on the first transmission control information, and pack the data according to a format of a transmission protocol to obtain one or more first data packets. In other words, there may be one or more first data packets. For example, the to-be-transmitted data is relatively large, but a bit width of the data in each data packet is limited, that is, a size of data transmitted through one data packet is a fixed size determined by the transmission protocol. In this case, if the size of the to-be-transmitted data exceeds the fixed size of the data in one data packet, it is needed to split the to-be-transmitted data into a plurality of data blocks, where each data block is packed into a data packet. Thus, a plurality of first data packets are obtained. Further, the first data packets may be transmitted to the second processing element 22j through the interconnection network.

In some optional embodiments, the second processing element 22j may read to-be-stored (or written) data from the first data packet based on the second transmission control information, and store the same into the local memory through a specified write port (that is, the target write port). Alternatively, the second processing element 22j may first determine whether to store the data in the first data packet based on the second transmission control information and control information in the first data packet. The control information in the first data packet is relevant information used to ensure reliable transmission, and may include first source device identification information, first read port identification information, and the destination device identification information. In a case where it is determined that the data in the first data packet needs to be stored, the second processing element 22j stores at least a part of the data in the first data packet into the local memory through the specified write port. The target write port may be determined by the processor 21 based on operating statuses of write ports in the second processing element 22j. In other words, the processor 21 may designate the target write port from the write ports in the idle status of the second processor element 22j. The processor 21 may specify the target write port based on the second transmission control information. To be specific, if the second transmission control information includes identification information of the target write port, or when the second processing element 22j includes the configuration register corresponding to each write port, the processor 21 may specify the target write port by configuring the second transmission control information to the configuration register corresponding to the target write port. A specific manner of determining the target write port is not limited in this disclosure.

In some optional embodiments, the first data packet may include a control information domain segment and a data domain segment. The control information domain segment includes the control information described above, for example, may include first source device identification information, first read port identification information, and the destination device identification information. The data domain segment may include all or a part of data in a to-be-transmitted data packet. The second processing element 22j may read data from the data domain segment, and store the read data into the local memory.

In some optional embodiments, in a data transmission scenario of the circular interconnection network, for an interconnection network that requires data transmission through a certain data path, the second processing element 22j in the interconnection network may serve as a relay device to forward the received first data packet to a next processing element, thereby implementing multicasting or broadcasting. Whether the second processing element 22j needs to forward the first data packet may be controlled by the processor 21, or the second processing element may determine whether to perform a forwarding operation based on pre-configured logical information. A specific implementation manner is not limited.

According to the data transmission system provided in the embodiments, the processor configures the first transmission control information to the first processing element that serves as the source device, so that the first processing element that serves as the source device can determine the to-be-transmitted first data packet based on the first transmission control information, and transmit the first data packet to the second processing element that serves as the destination device through the interconnection network. The processor configures the second transmission control information to the second processing element, so that the second processing element can perform data storage based on the second transmission control information. Moreover, the source device is not required to consider a write port of the destination device. Therefore, a situation where data transmission can be performed merely when the source device specifies that the destination devices use a unified write port, so as to avoid waiting for a plurality of destination devices to have idle unified ports during multicasting or broadcasting. This can effectively reduce waiting time and can improve use efficiency of the write port, thereby improving transmission efficiency of an on-chip interconnection network.

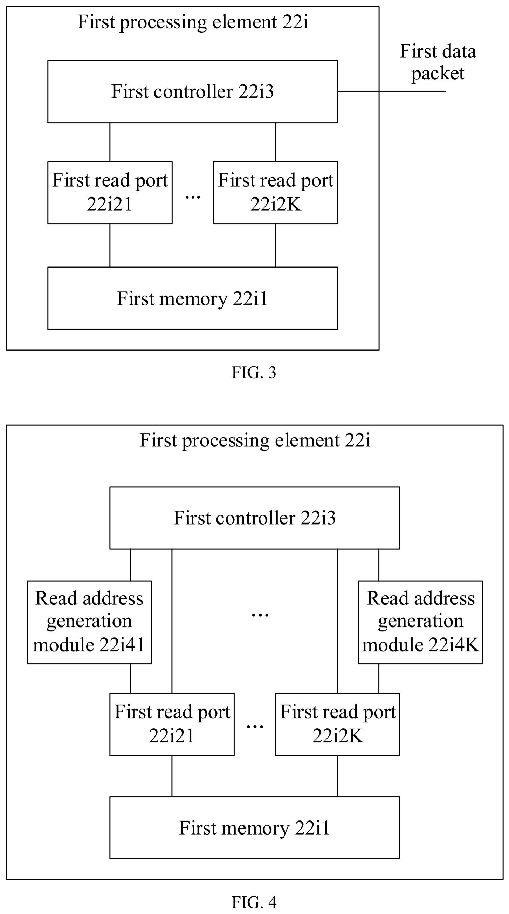

FIG. 3 is a schematic diagram of a structure of a first processing element according to an exemplary embodiment of this disclosure.

In some optional embodiments, on the basis of the embodiment shown in FIG. 2, as shown in FIG. 3, the first processing element 22i includes a first memory 22i1, at least one first read port 22i2k (k=1, 2, .., or K, where K represents a quantity of first read ports, and is a positive integer) corresponding to the first memory 22i1, and a first controller 22i3.

The first memory 22i1 is configured to store data.

Each first read port 22i2k is configured to read data from the first memory 22i1 when serving as a target read port.

The first controller 22i3 is configured to generate the first data packet based on the data read by the target read port and the first transmission control information, and transmit the first data packet to the second processing element 22j through the interconnection network.

The first memory 22i1 is an internal memory (or referred to as a local memory) of the first processing element 22i, which is configured to store at least one of input data, intermediate data, and output data of the first processing element 22i during operation. The first read port 22i2k is a port configured to read data from the first memory 22i1. The first memory 22i1 may correspond to one or more first read ports 22i2k. When the first processing element 22i serves as a source device, each first read port 22i2k may be used as a target read port to read data from the first memory 22i1. The first controller 22i3 is a core control device in the first processing element 22i, and is configured to complete various control functions during the operation of the first processing element 22i.

In some optional embodiments, the first controller 22i3 may receive the first transmission control information from the processor 21. Alternatively, when the processor 21 configures the first transmission control information to the configuration register in the first processing element 22i, the first controller 22i3 may read the first transmission control information from the configuration register. The first controller 22i3 may determine the identification information of the target read port and the read address control information based on the first transmission control information; and then control, based on the read address control information, the target read port to read data from the first memory 22i1; and generate the first data packet based on the read data.

In some optional embodiments, the first controller 22i3 may read the destination device identification information from the first transmission control information, and generate one or more first data packets based on the data read by the target read port and the destination device identification information.

In some optional embodiments, the first controller 22i3 may generate one or more first data packets based on the data read by the target read port and source device identification information of the first processing element 22i.

In some optional embodiments, the first controller 22i3 may generate one or more first data packets based on the data read by the target read port and read port identification information of the target read port.

In some optional embodiments, the first controller 22i3 may generate one or more first data packets based on the data read by the target read port, the source device identification information (which may be represented by SID) of the first processing element 22i, and the read port identification information of the target read port. Specific content of the control information domain segment in the first data packet may be set according to actual requirements, which is not limited in the embodiments of this disclosure.

In some optional embodiments, the first processing element 22i may also include one or more registers, such as a register for storing a source device identifier of the first processing element 22i, a register for storing identification information of the first read ports, and the configuration register for storing the first transmission control information.

In some optional embodiments, the first controller 22i3 and the first read port 22i2k are hardware.

In some optional embodiments, the first read port 22i2k is electrically connected to the first memory 22i1 and the first controller 22i3, respectively.

In the embodiments of this disclosure, the source device may read the to-be-transmitted data from the first memory through the target read port, and generate the first data packet based on the first transmission control information from the processor and the data read by the target read port. The first transmission control information is configured by the processor, and the source device is not required to consider the write port of the destination device. Therefore, a situation where data transmission can be performed merely when the source device specifies that the destination devices use a unified write port can be avoided, which effectively reduces waiting time, thereby improving efficiency of data transmission to a plurality of destination devices.

In some optional embodiments, the first controller 22i3 is further configured to monitor operating statuses of the first read ports 22i2k and send the operating statuses of the first read ports 22i2k to the processor 21. The operating status of each first read port 22i2k includes an idle status and a working status.

The processor 21 is configured to determine the target read port from the first read port 22i2k based on the operating status of the first read port 22i2k, determine the first transmission control information based on the read port identification information of the target read port, and send the first transmission control information to the first processing element 22i.

The idle status indicates that the first read port 22i2k is not occupied, while the working status indicates that the first read port 22i2k is occupied, that is, the first read port 22i2k is currently occupied by another task. The target read port is a read port used in a current data transmission task to read data from the first memory 22i1. The read port identification information of the target read port is information set for the first read port for identifying the first read port. For example, the read port identification information may be a number of the read port, and may be represented by RID.

In some optional embodiments, the first controller 22i3 may maintain a status of the first read port 22i2k in a real-time manner. For example, the first processing element 22i may execute one or more tasks concurrently. For any first read port 22i2k, if the first read port 22i2k is taken as a target read port by a task being executed, the first controller 22i3 may update the status of the first read port 22i2k to the working status; and if the first read port 22i2k completes a data read operation of the corresponding task, the first controller 22i3 may update the status of the first read port 22i2k to the idle status.

In some optional embodiments, the first processing element 22i or the first controller 22i3 may include status registers corresponding to the first read ports 22i2k, for storing operating statuses corresponding to the first read ports 22i2k. In response to a read port status query request from the processor 21, the first controller 22i3 may obtain the operating status of the first read port 22i2k from the status register, and send the operating status of the first read port 22i2k to the processor 21. Alternatively, the first controller 22i3 may obtain the operating status of the first read port 22i2k from the status register at a specified cycle or frequency, and send the operating status of the first read port 22i2k to the processor 21. Based on the operating statuses of the first read ports 22i2k, the processor 21 determines the target read port from the first read ports 22i2k of which the operating statuses are the idle status.

In some optional embodiments, the processor 21 may determine the first transmission control information based on the read port identification information of the target read port according to a preset protocol format corresponding to the first transmission control information, and then send the first transmission control information to the first processing element 22i, or write the first transmission control information into the configuration register in the first processing element 22i. Alternatively, the first transmission control information is written into the corresponding configuration register by the first controller 22i3 in the first processing element 22i. The preset protocol format corresponding to the first transmission control information refers to a protocol format that the first transmission control information needs to meet. The preset protocol format constrains arrangement formats of different types of information in the first transmission control information. For example, according to the preset protocol format, the first transmission control information sequentially includes, from low bits to high bits or from high bits to low bits, the read address control information, the target read port identification information, the destination device identification information, the transmission length information, and the transmission direction information.

In some optional embodiments, the processor 21 may determine the first transmission control information according to the preset protocol format corresponding to the first transmission control information based on the read port identification information of the target read port (that is, the target read port identification information), the read address control information, the transmission length information, the destination device identification information, and the transmission direction information of the to-be-transmitted data in the current data transmission task, so that the first processing element 22i can read various information from the first transmission control information according to the corresponding preset protocol format.

In the embodiments of this disclosure, the processor may determine the idle target read port based on statuses of the first read ports in the first processing element, so as to determine the first transmission control information based on the read port identification information of the target read port, and transmit the first transmission control information to the first processing element. Because the first transmission control information includes the read port identification information of the target read port and the target read port is in the idle status, the first processing element can read the to-be-transmitted data from the first memory in a timely manner through the target read port, and transmit the to-be-transmitted data to the destination device in a timely manner. As the source device, the first processing element does not need to consider the operating status of the write port of the destination device, thus ensuring real-time performance of the data transmission task.

FIG. 4 is a schematic diagram of a structure of a first processing element according to another exemplary embodiment of this disclosure.

In some optional embodiments, on the basis of any one of the foregoing embodiments, the first transmission control information includes the read address control information.

As shown in FIG. 4, the first processing element 22i further includes: a read address generation module 22i4k corresponding to each first read port 22i2k, wherein when the first read port 22i2k serves as the target read port, the read address generation module 22i4k corresponding to the target read port is configured to generate read address information based on the read address control information, and transmit the read address information to the target read port 22i2k.

The target read port 22i2k is configured to read data from the first memory 22i1 based on the read address information.

The read address control information is control information required by the first processing element 22i to obtain the read address information in the to-be-transmitted data. For example, the read address control information may include data structure information, starting address information, and the like of the to-be-transmitted data. The data structure information may include dimensions of the to-be-transmitted data and strides of the dimensions. For example, the dimensions of the data include batch size N, height H, width W, and depth C; and may be represented by N*H*W*C. The strides of the dimensions may be determined according to a data arrangement rule, which is an arrangement rule for storing data in the first memory. The data arrangement rule includes an arrangement order of the dimensions. During data arrangement, the dimensions are sequentially traversed according to the arrangement order of the dimensions, to store data with N*H*W*C into the first memory. The traversal process is described by using four-layer circulation as an example. If the dimension C is an innermost layer, a corresponding stride is 1, that is, data in the dimension C is arranged and stored successively. If the dimension W is a second innermost layer, a stride in the dimension W is C. Others may be deduced by analogy, and a stride in the dimension H is a product of W and C. Taking data with a structure of 1*3*4*4 as an example, it is satisfied that N=1, H=3, W=4, and C=4, equivalent to a matrix including C layers of H*W. During data storage, the dimension C is traversed first; subsequently, the dimension W is traversed; and then the dimension H is traversed. To be specific, first, when h=1 and w=1, data in four depth directions of c=1, c=2, c=3, and c=4 (that is, C) is stored sequentially. Subsequently, when h=1 and w=2, data in four depth directions of c=1, c=2, c=3, and c=4 is stored sequentially. The others may be deduced by analogy, until w=4 (that is, W) is traversed. Again, when h=2 and w=1, data in four depth directions of c=1, c=2, c=3, c=4 is stored sequentially, until h=3 (that is, H) is traversed. Thus far, because N=1, storage of the data with the structure of 1*3*4*4 is completed. h represents an h^{th} row of the matrix, w represents a w^{th} column of the matrix, and c represents a c^{th} layer. In view of the above, the dimension C traversed at the innermost layer corresponds to a stride of 1, that is, data in this dimension is successively arranged. A stride of the dimension W at the second innermost layer is C. To be specific, in a memory, there is C-1 pieces of data between adjacent two columns of data in a same row in the matrix. A stride of the dimension H is a product 16 of W and C. In practical application, the data arrangement rule is not limited to the arrangement rule in the foregoing example.

In some optional embodiments, the read address generation module 22i4k is a module that converts the read address control information into the read address information.

In some optional embodiments, the read address generation module 22i4k may be implemented through software, hardware, or a combination of software and hardware. To ensure real-time data transmission, the read address generation module 22i4k may be implemented through a hardware logic device. For example, the read address generation module 22i4k may include a register and a calculation unit. The register may be configured to cache the read address control information, and the calculation unit may be configured to calculate the read address information based on the read address control information. For example, the calculation unit may calculate the read address information of the data based on the starting address information and the strides of the dimensions of the to-be-transmitted data.

In some optional embodiments, each read address generation module 22i4k is electrically connected to the corresponding first read port 22i2k and the first controller 22i3. The read address information generated by the read address generation module 22i4k is transmitted to the corresponding target read port 22i2k. Based on the read address information, the target read port 22i2k reads data from a storage space corresponding to the read address information in the first memory 22i1. The first controller 22i3 obtains the read data from the target read port 22i2k, and generates one or more first data packets based on the obtained data.

In some optional embodiments, the first controller 22i3 reads the read address control information from the first transmission control information, writes the read address control information into the register in the read address generation module 22i4k, and controls the calculation unit in the read address generation module 22i4k to generate the read address information based on the read address control information.

In the embodiments of this disclosure, the read address control information of the to-be-transmitted data is configured by the processor, so that the read address generation module corresponding to the target read port in the first processing element can generate the valid read address information based on the read address control information, providing accurate and valid read address information for the target read port, thereby achieving reading of the to-be-transmitted data.

In some optional embodiments, the first transmission control information includes the destination device identification information.

The first controller 22i3 is specifically configured to generate the first data packet based on the data read by the target read port 22i2k, the destination device identification information, the source device identification information corresponding to the first processing element 22i, and read port identification information of the target read port 22i2k.

The destination device identification information is identification information of the destination device to which the data flows. For example, the destination device identification information may be a destination device number set for the processing element, and may be represented by DID. The source device identification information is identification information set for the processing element serving as the source device. For example, the source device identification information may be a source device number set for the processing element, and may be represented by SID.

In some optional embodiments, any processing element may have at least one of the corresponding source device identification information and destination device identification information. For example, the source device identification information may be allocated to the processing element when the processing element may serve as the source device. The destination device identification information may be allocated to this processing element when this processing element may serve as the destination device. The source device identification information and the destination device identification information may be allocated to this processing element when this processing element may serve as either the source device or the destination device. Optionally, the source device identification information and the destination device identification information of a same processing element may be same or different. For example, a unique identifier may be set for the processing element to serve as an element identifier of the processing element. The element identifier may serve as either the source device identification information or the destination device identification information corresponding to the processing element, which is not specifically limited.

In some optional embodiments, the first controller 22i3 may obtain the destination device identification information from the first transmission control information. Alternatively, when the destination device is fixed in an application scenario, the destination device identification information may be pre-configured in the first processing element. For example, the destination device identification information may be configured by using a register, and the first controller 22i3 may read the destination device identification information from the corresponding register.

In some optional embodiments, the first controller 22i3 may read the source device identification information corresponding to the first processing element 22i from a register storing the source device identification information of the first processing element 22i.

In some optional embodiments, the first controller 22i3 may read the read port identification information from a register storing the read port identification information of the target read port 22i2k.

In some optional embodiments, the first controller 22i3 may generate one or more first data packets according to a format corresponding to the first data packet based on the data read by the target read port 22i2k, the destination device identification information, the source device identification information corresponding to the first processing element 22i, and the read port identification information of the target read port 22i2k. For example, the first data packet may include the control information domain segment and the data domain segment. The control information domain segment includes a destination device identification information (DID) sub-domain segment, a source device identification information (SID) sub-domain segment, a read port identification information (RID) sub-domain segment, and other relevant control information sub-domain segments. A specific format of the data packet is not limited.

In some optional embodiments, the source device identification information in the first data packet and the read port identification information of the target read port may be used for verification operations by a processing element (such as the second processing element 22j) that receives the first data packet. For example, the processing element receiving the first data packet may match the source device identification information and the read port identification information in the first data packet with the second transmission control information configured in this processing element, to determine whether the data in the first data packet needs to be stored by this processing element. Alternatively, the processing element may match the source device identification information and the read port identification information in the first data packet with the second transmission control information corresponding to the write ports in the processing element, to determine which write port performs the write operation on the data in the first data packet.

In some optional embodiments, the destination device identification information may be used to identify the destination device to which the first data packet needs to be transmitted. The processing element receiving the first data packet may determine, based on the destination device identification information, whether the first data packet is sent to this processing element.

In the embodiments of this disclosure, the source device identification information and the target read port identification information are carried in the first data packet, so that the destination device can determine the target write port based on the information in the first data packet in combination with the second transmission control information, or determine whether to store the data in the first data packet, thereby ensuring accuracy and reliability of data transmission.

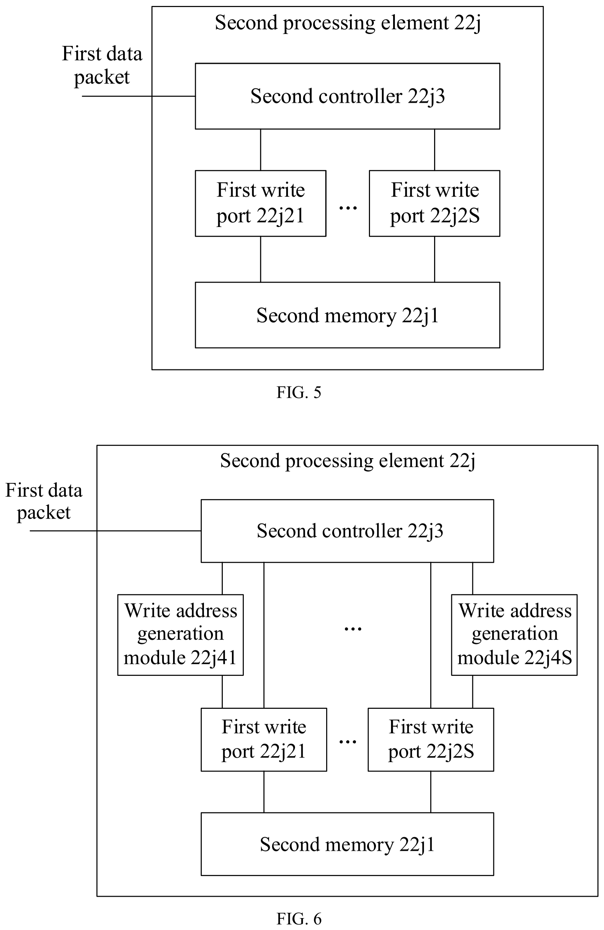

FIG. 5 is a schematic diagram of a structure of a second processing element according to an exemplary embodiment of this disclosure.

In some optional embodiments, on the basis of any one of the foregoing embodiments, as shown in FIG. 5, the second processing element 22j includes a second memory 22j1, and at least one first write port 22j2s (s=1, 2, .., or S, where S represents a quantity of first write ports, and is a positive integer) corresponding to the second memory 22j 1.

The second memory 22j1 is configured to store data.

Each first write port 22j2s is configured to write at least a part of the data in the first data packet into the second memory 22j1 when serving as a target write port.

The second memory 22j1 is an internal memory (or referred to as a local memory) of the second processing element 22j, which is configured to store at least one of input data, intermediate data, and output data of the second processing element 22j during operation. The first write port 22j2s is a port configured to write data to the second memory 22j1.

In some optional embodiments, the second memory 22j1 may correspond to one or more first write ports 22j2s. For any first write port 22j2s, whether this first write port 22j2s can be used as a target write port may be determined by the processor 21 based on statuses of the first write ports. For example, in the current data transmission task, the processor 21 may determine the target write port from idle first write ports based on the statuses of the first write ports. Any first write port 22j2s, when serving as the target write port, may write at least a part of the data in the first data packet into the second memory 22j 1, for example, may write data in the data domain segment in the first data packet into the second memory 22j1. The specific data that needs to be written into the second memory 22j1 is not limited.

In some optional embodiments, each first write port 22j2s may have a corresponding configuration register for storing the second transmission control information of the first write port 22j2s that serves as the target write port. For example, the second processing element 22j may execute one or more processing tasks or data transmission tasks concurrently. If different first write ports may be used as target write ports for different tasks, different second transmission control information, or different source device identification information and/or target read port identification information may be configured for the first write ports that serve as the target write ports, respectively. The second processing element 22j may determine the target write port corresponding to the first data packet based on the control information in the received first data packet and the configuration information corresponding to the first write ports, to ensure accuracy and reliability of data transmission.

In the embodiments of this disclosure, each first write port in the second processing element may perform an operation of writing data into the second memory when serving as the target write port. Because the operation of the second processing element is controlled by the second transmission control information that is configured by the processor, the target write port may be specified by the processor based on the statuses of the first write ports, thereby improving flexibility of the target write port and increasing utilization of the write port in the destination device.

In some optional embodiments, the second processing element 22j further includes a second controller 22j3.

The second controller 22j3 is configured to:

parse the first data packet to obtain the first source device identification information and the first read port identification information of the first target read port in the first data packet; determine, based on the first source device identification information, the first read port identification information, and the second transmission control information, whether to store the data in the first data packet; and in response to that it is determined to store the data in the first data packet, control the target write port to write at least a part of the data in the first data packet into the second memory 22j1.

The second controller 22j3 is a core control device in the second processing element 22j, which may be configured to implement control functions of other components in the second processing element 22j, such as receiving the first data packet transmitted on a data transmission path, controlling operations of the first write ports, and monitoring the statuses of the first write ports.

In some optional embodiments, the second controller 22j3 may be implemented by using any implementable controller. This is not limited in the embodiments of this disclosure.

In some optional embodiments, the second controller 22j3 may parse the first data packet according to a pre-configured data packet parsing rule (or referred to as an unpacking rule), and read the first source device identification information and the first target read port identification information from the first data packet. Thus, the first source device identification information and the first read port identification information may be matched with second source device identification information and second read port identification information in the second transmission control information, so as to determine, based on a matching result, whether to store the data in the first data packet.

In some optional embodiments, when the second processing element 22j includes configuration registers corresponding to the first write ports, the configuration registers are configured to store the second transmission control information corresponding to the first write ports, or to store the second source device identification information and the second read port identification information corresponding to the first write ports. The second controller 22j3 may determine, based on the first source device identification information, the first read port identification information, and the second transmission control information (or the second source device identification information and the second read port identification information) corresponding to each first write port, whether the data in the first data packet is stored by the first write port. The successfully matched first write port is the target write port corresponding to the current first data packet, and the second controller 22j3 may control the target write port to write at least a part of the data in the first data packet into the second memory.

In the embodiments of this disclosure, whether to store the data in the first data packet is determined in combination with a first source device identifier and the first read port identification information in the first data packet and the second transmission control information, so as to verify the data transmission, thereby preventing the processing element from storing data that does not belong to first data of the processing element. In this way, accuracy and reliability of the data transmission may be improved.

In some optional embodiments, the second transmission control information includes the second source device identification information and the second read port identification information.

The second controller 22j3 is configured to match the first source device identification information and the first read port identification information with the second source device identification information and the second read port identification information, to determine whether to store the data in the first data packet based on a matching result.

The matching result may include two cases: matching and mismatching. Matching indicates that the first source device identification information is same as the second source device identification information, and the first read port identification information is same as the second read port identification information. Mismatching indicates that either the first source device identification information is different from the second source device identification information, or the first read port identification information is different from the second read port identification information; or the first source device identification information is different from the second source device identification information, and the first read port identification information is different from the second read port identification information. If the matching result is matching, it is determined that the data in the first data packet needs to be stored. If the matching result is mismatching, it is determined not to store the data in the first data packet.

In the embodiments of this disclosure, whether to store the data in the first data packet is determined by matching data source information (that is, the first source device identification information and the first read port identification information) of the first data packet with data source information (that is, the second source device identification information and the second read port identification information) in the second transmission control information configured by the processor. In a case of successful matching, it is indicated that a true data source is consistent with a data source configured by the processor, which can ensure the accuracy and the reliability of the data transmission.

In some optional embodiments, the second controller 22j3 is further configured to send abnormality prompt information to the processor 21 in response to that the matching result is mismatching.

If the matching result is mismatching, it indicates that a data source of the first data packet is not consistent with the data source configured by the processor, which may be caused by a configuration information error, data packet tampering, or other errors or failures. In this case, the second controller 22j3 may send the abnormality prompt information to the processor 21 to prompt the processor 21 to handle this issue in a timely manner.

In some optional embodiments, the second processing element 22j may include the configuration registers corresponding to the first write ports, so as to store the second source device identification information and the second read port identification information in the second transmission control information corresponding to the first write ports. In other words, when any first write port 22j2s is used as the target write port, the second source device identification information and the second read port identification information in the second transmission control information corresponding to that target write port are written into the configuration register corresponding to that target write port. After obtaining the first source device identification information and the first read port identification information from the first data packet, the second controller 22j3 may match the first source device identification information and the first read port identification information with the second source device identification information and the second read port identification information in the configuration register corresponding to each first write port. If the matching result is matching, it is determined that the data in the first data packet needs to be stored, and the matching first write port is used as the target write port to write at least a part of the data in the first data packet into the second memory 22j1. If the matching result of the information in the configuration register of each first write port is mismatching, but data from the target read port of the source device is received and the configuration register is configured by the processor 21, it indicates that there may be an error or a failure in this data transmission, or there is a configuration error in the processor 21. In this case, the abnormality prompt information may be sent to the processor 21. Optionally, during the matching process, the configuration register of the first write port in the idle status may not include the second source device identification information and the second read port identification information, and a matching operation may not be performed, thereby reducing computational complexity.

In the embodiments of this disclosure, when the data source information carried in the first data packet does not match the data source information configured by the processor, the abnormality prompt information is sent to the processor in a timely manner to enable the processor to discover and resolve problems in a timely manner, thereby ensuring the reliability of the data transmission.

FIG. 6 is a schematic diagram of a structure of a second processing element according to another exemplary embodiment of this disclosure.

In some optional embodiments, on the basis of any one of the foregoing embodiments, the second transmission control information includes the write address control information.

The second processing element 22j further includes a corresponding write address generation module 22j4s of each first write port 22j2s.

When the first write port 22j2s serves as the target write port, the write address generation module 22j4s corresponding to the target write port is configured to determine write address information based on the write address control information, and transmit the write address information to the target write port;

The second controller 22j3 is further configured to transmit at least a part of the data in the first data packet to the target write port in a case where it is determined to store at least a part of the data in the first data packet.

The target write port 22j2s is specifically configured to write at least a part of the data in the first data packet into the second memory 22j1 based on the write address information.

The write address control information is control information required for determining the write address information. For example, the write address control information may include data structure information and the like of a to-be-written data block. For the data structure information of the data block, reference may be made to the foregoing embodiments, and details are not described herein again.

In some optional embodiments, the write address generation module 22j4s is a module that converts the write address control information into the write address information.

In some optional embodiments, the write address generation module 22j4s may be implemented through software, hardware, or a combination of hardware and software. To ensure real-time data transmission, the write address generation module 22j4s may be implemented by using a hardware logic device. For example, the write address generation module 22j4s may include a register and a calculation unit. The register may be configured to cache the write address control information, and the calculation unit may be configured to calculate the write address information based on the write address control information. A specific calculation principle is similar to that of the read address information, and details are not described herein.

In some optional embodiments, each write address generation module 22j4s is electrically connected to the corresponding first write port 22j2s and the second controller 22j3. The write address information generated by the write address generation module 22j4s is transmitted to the corresponding target write port 22j2s. The target write port 22j2s writes, based on the write address information, at least a part of the data in the first data packet into a storage space corresponding to the write address information in the second memory 22j1. The data to be written may be transmitted from the first controller 22j3 to the target write port 22j2s.

In some optional embodiments, the second controller 22j3 reads the write address control information from the second transmission control information, writes the write address control information into the register in the write address generation module 22j4s, and controls the calculation unit in the write address generation module 22j4s to generate the corresponding write address information based on the write address control information.

In the embodiments of this disclosure, the write address control information is configured by the processor, so that the write address generation module corresponding to the target write port in the second processing element can generate the valid write address information based on the write address control information, providing accurate and valid write address information for the target write port. Thus, the target write port can successfully write data into the second memory.

In some optional embodiments, the second controller 22j3 is further configured to monitor statuses of the first write ports 22j2s in the second processing element 22j and send the statuses of the first write ports 22j2s to the processor 21. The status of each first write port 22j2s includes an idle status and a working status.

The processor 21 is configured to: determine the target write port from the first write ports 22j2s based on the statuses of the first write ports 22j2s, determine the second transmission control information based on write port identification information of the target write port, and send the second transmission control information to the second processing element 22j.

The idle status indicates that the first write port 22j2s is not occupied, while the working status indicates that the first write port 22j2s is occupied, that is, the first write port 22j2s is currently occupied by another task. The determined target write port is a first write port used in the current data transmission task to write data into the second memory 22j1. The write port identification information of the target write port is used as identification information of a first write port of the target write port. The write port identification information is information set for the first write port for identifying the first write port. For example, the write port identification information may be a number of the write port, and may be represented by WID.

In some optional embodiments, the second controller 22j3 may maintain the statuses of the first write ports 22j2s in a real-time manner. A status maintenance manner for the first write port 22j2s is similar to that for the first read port 22i2k. For example, the statuses of the first write ports 22j2s may be recorded by a status register, and details are not described herein.

In some optional embodiments, in response to a write port status query request of the processor 21, the second controller 22j3 may send the statuses of the first write ports 22j2s to the processor 21.

In some optional embodiments, the processor 21 may determine the target write port from idle first write ports 22j2s based on the statuses of the first write ports 22j2s, so as to determine the second transmission control information based on the write port identification information of the target write port, and send the second transmission control information to the second processing element 22j. Optionally, the processor 21 may configure the second transmission control information to the corresponding configuration register in the second processing element 22j, or the second transmission control information may be written into the corresponding configuration register by the second controller 22j3 in the second processing element 22j.

In the embodiments of this disclosure, the statuses of the first write ports are monitored by using the second controller, and are sent to the processor. The processor can flexibly select the idle first write port to serve as the target write port for the current transmission task based on the statuses of the first write ports. In this way, in a case of multicasting or broadcasting, the processor may designate respective idle write ports as target write ports for a plurality of second processing elements that serve as destination devices, to prevent the plurality of destination devices from using a unified write port. Thus, utilization of the write ports of the processing elements may be effectively improved, thereby enhancing data transmission efficiency.

In some optional embodiments, the first controller 22i3 in the first processing element 22i and the second controller 22j3 in the second processing element 22j may be implemented by using a state machine. The state machine is composed of a status register and a combinational logic circuit, being capable of performing status transitions according to a preset status based on a control signal.

In some optional embodiments, an execution process of a data transmission task may include: the processor 21 configures and starts the data transmission task; the source device (such as the first processing element 22i) reads data from the local memory through the target read port, packs the read data and the first transmission control information configured by the processor 21 to obtain one or more first data packets, and routes the first data packet to the destination device through an interconnection network; and the destination device (such as the second processing element 22j) decodes the first data packet, determines whether to store the data in the first data packet, and writes the data into the local memory through the specified idle target write port in a case where it is determined to store the data in the first data packet. The configuration of the data transmission task includes configuring the first transmission control information to the source device and configuring the second transmission control information to the destination device. Startup refers to starting the source device and the destination device, so that the source device and the destination device enter a working status of the current data transfer task. Optionally, to ensure reliable execution of the data transmission task, the destination device may be started first, and then the source device is started, so as to ensure that the destination device is in a valid working status when the first data packet is sent by the source device. Optionally, the processor 21 may start the destination device and the source device through a start instruction.

In some optional embodiments, the first processing element 22i may cache the read address information, the to-be-transmitted data, and the like through a buffer. For example, the buffer may be a FIFO (first input first output) buffer.

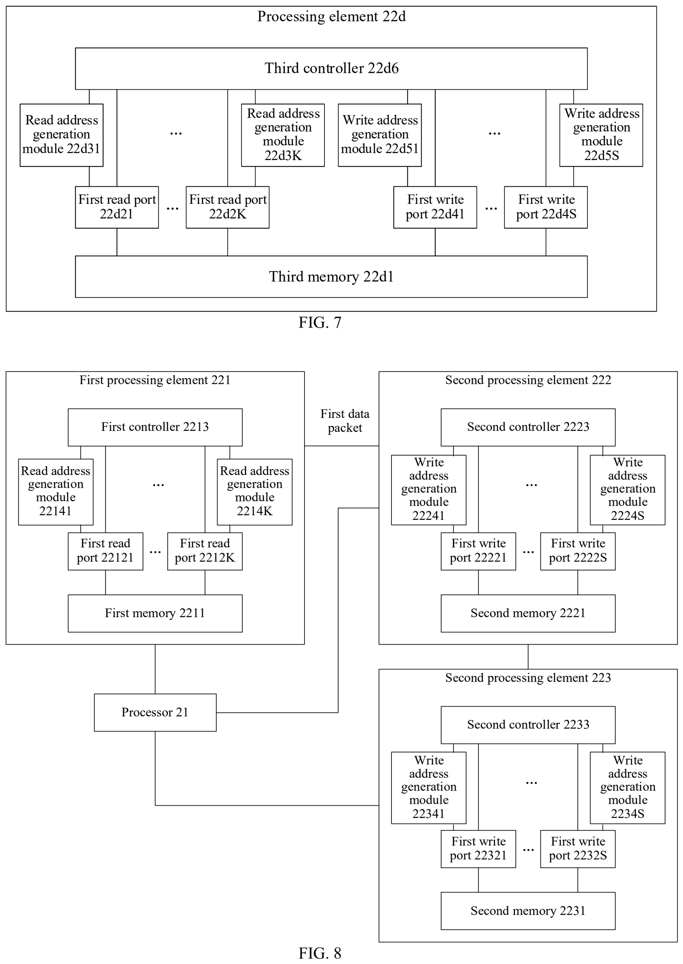

In some optional embodiments, FIG. 7 is a schematic diagram of a structure of a processing element according to an exemplary embodiment of this disclosure. As shown in FIG. 7, any processing element 22d (d=1, 2, ..., or m) may be used as either a source device or a destination device. In this case, the processing element 22d may include a third memory 22d1, at least one first read port 22d2k corresponding to the third memory 22d1, a corresponding read address generation module 22d3k of each first read port 22d2k, at least one first write port 22d4s corresponding to the third memory 22d1, a corresponding write address generation module 22d5s of each first write port 22d4s, and all or a part of a third controller 22d6 (as shown in FIG. 7). The third memory 22d1 may be used as the first memory 22i1 or the second memory 22j 1. The third controller 22d6 has the functions of the first controller 22i3 and the second controller 22j3. In other words, the third controller 22d6 may be used as the first controller 22i3 or the second controller 22j3. Alternatively, the third controller 22d6 may include the first controller and the second controller. The first read port, the read address generation module, the first write port, and the write address generation module are consistent with those in the foregoing embodiments, and reference may be made to the foregoing embodiments for specific operations of components.

In some optional embodiments, FIG. 8 is a schematic diagram of a structure of a data transmission system according to another exemplary embodiment of this disclosure. As shown in FIG. 8, when there are a plurality of processing elements serving as destination devices in the processing element, that is, there are a plurality of second processing elements 22j with different j values, taking i=1 and j=2 or 3 as an example, the interconnection network takes a circular interconnection network as an example, and the first processing element 221 includes a first memory 2211, K first read ports (a first read ports 22121, .., and a first read ports 2212K), K read address generation modules (a read address generation module 22141, ..., and a read address generation module 2214K), and a first controller 2213. The second processing element 222 includes a second memory 2221, S first write ports (a first write port 22221, ..., and a first write port 2222S), S write address generation modules (write address generation module 22241, ..., and 2224S), and a second controller 2223. The second processing element 223 includes a second memory 2231, S first write ports (a first write port 22321, ..., and a first write port 2232S), S write address generation modules (write address generation module 22341, ..., and 2234S), and a second controller 2233. The processor 21 configures the first transmission control information to the first processing element 221, and transmits the corresponding second transmission control information to the second processing element 222 and the second processing element 223, respectively. The first processing element 221 determines the to-be-transmitted first data packet based on the first transmission control information from the processor 21, and transmits the first data packet to the second processing element 222 and the second processing element 223 through the interconnection network. The second processing element 222 parses the first data packet to obtain the first source device identification information in the first data packet and the first read port identification information of the first target read port, and obtain the second source device identification information and the second read port identification information based on the second transmission control information from the processor; matches the first source device identification information and the first read port identification information with the second source device identification information and the second read port identification information (that is, matches the first source device identification information with the second source device identification information, and matches the first read port identification information with the second read port identification information); and determines, based on a matching result, whether to store the data in the first data packet. If it is determined to store the data in the first data packet, at least a part of the data in the first data packet (such as the data in the data domain segment in the first data packet) is written into the second memory 2221. If the matching result is mismatching, abnormality prompt information may be sent to the processor 21. Specific operations of the second processing element 223 are similar to those of the second processing element 222, and details are not described herein. For specific operations of components in the first processing element 221, the second processing element 222, and the second processing element 223, reference may be made to the foregoing embodiments.

Optionally, for the circular interconnection network, the first processing element 221 transmits the first data packet to the second processing element 222, and the first data packet may be transmitted to the second processing element 223 by the second processing element 222. For interconnection networks with other topologies, the first data packet may be transmitted to the second processing elements according to a corresponding manner of multicasting or broadcasting. For example, when the first processing element 221 is connected to the second processing elements through buses, the first processing element 221 may transmit the first data packet to the second processing elements through the buses, separately. The specific manner of multicasting or broadcasting is not limited.

In a transmission protocol in the related technologies, the source device specifies that the destination devices use a unified write port to write data, which constrains all destination devices to use write ports with same code. This may reduce use efficiency of the write ports, and reduces data transmission efficiency of the interconnection network. In this case, if the source device specifies in the transmission protocol that each destination device uses the respective idle write port, an increase in a data volume of control information in the transmitted first data packet may be resulted in. In other words, it is needed to specify the corresponding target write port for each destination device in the first data packet, which may lead to an increase in area power consumption of the interconnection network. Moreover, a quantity of bits occupied by write-port code in the transmission protocol is strongly coupled with a total quantity of processing elements in the interconnection network. Development code related to the transmission path needs to be modified if the quantity of the processing elements in the interconnection network needs to be increased or decreased. For example, all development code related to the write-port code on the transmission path needs to be modified, which may result in increases in costs of chip design and verification, and greatly reduce efficiency of development work.

Regarding the foregoing issues, in the data transmission system provided in the embodiments of this disclosure, if new processing elements need to be added to the interconnection network, the new processing elements may be configured by the processor. If it is needed to reduce the processing elements, the processor does not configure the reduced processing elements, and there is no need to carry a write port number (that is, the write port identification information) of the destination device in the transmission protocol, thereby implementing decoupling between the transmission protocol and the write port. Therefore, there is no need to modify content of the transmission protocol or modify the code on the transmission path, which may also reduce resource occupation of the control information on the transmission path. Moreover, since configuration of the write port of each destination device is independent, idle write port resources of the destination device may be flexibly used to improve the transmission efficiency. In addition, if there is a routing error, the destination device may match the data source information in the received first data packet with the configured data source information, discover the error based on a matching result, and report the error to the processor, thereby achieving the purpose of error detection and improving reliability of the data transmission.

The foregoing embodiments of this disclosure may be implemented separately or in any combination without conflict. This may be specifically set according to actual requirements, and is not limited in this disclosure.

### Exemplary method

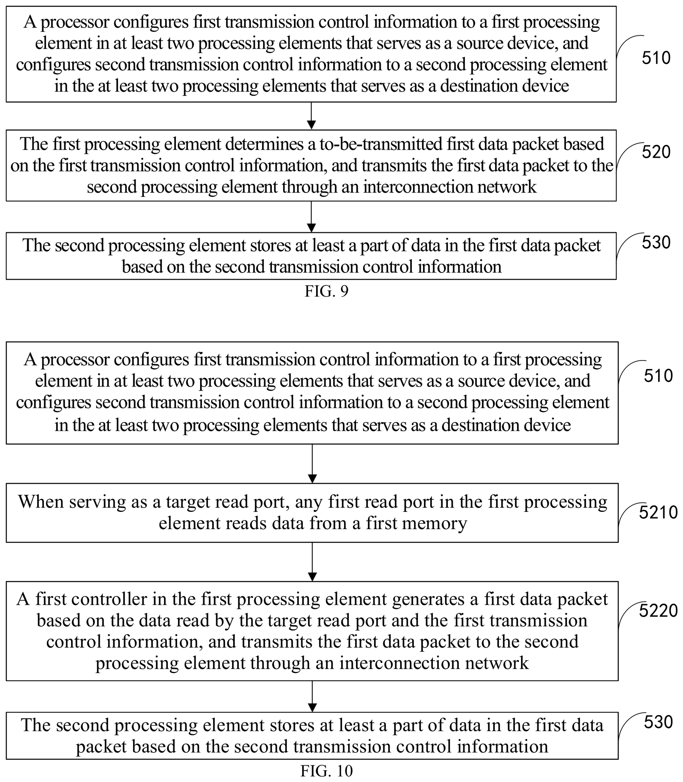

FIG. 9 is a schematic flowchart of a data transmission method according to an exemplary embodiment of this disclosure. The method in this embodiment may be implemented by using a corresponding data transmission system in this disclosure. As shown in FIG. 9, the method in this embodiment of this disclosure may include the following steps.

Step 510: A processor configures first transmission control information to a first processing element in at least two processing elements that serves as a source device, and configures second transmission control information to a second processing element in the at least two processing elements that serves as a destination device.

The at least two processing elements are interconnected to form an interconnection network.

Step 520: The first processing element determines a to-be-transmitted first data packet based on the first transmission control information, and transmits the first data packet to the second processing element through the interconnection network.

Step 530: The second processing element stores at least a part of data in the first data packet based on the second transmission control information.

FIG. 10 is a schematic flowchart of a data transmission method according to another exemplary embodiment of this disclosure.

In some optional embodiments, on the basis of any one of the foregoing embodiments, as shown in FIG. 10, the first processing element includes a first memory, at least one first read port corresponding to the first memory, and a first controller.

Step 520 of determining, by the first processing element, the to-be-transmitted first data packet based on the first transmission control information, and transmitting the first data packet to the second processing element through the interconnection network includes the following steps.

Step 5210: When serving as a target read port, any first read port in the first processing element reads data from the first memory.

Step 5220: The first controller in the first processing element generates the first data packet based on the data read by the target read port and the first transmission control information, and transmits the first data packet to the second processing element through the interconnection network.

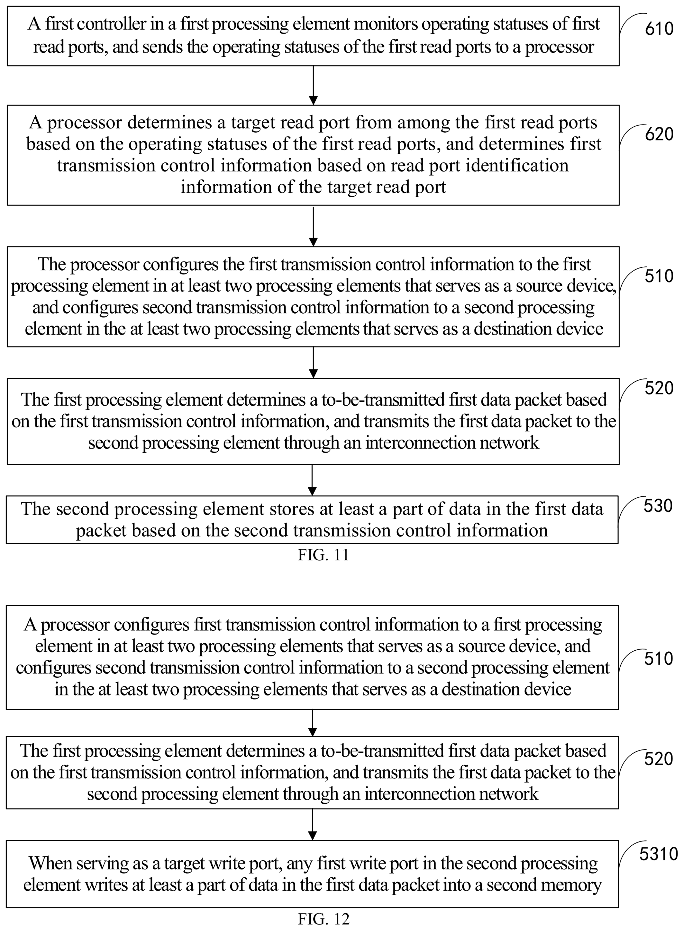

FIG. 11 is a schematic flowchart of a data transmission method according to still another exemplary embodiment of this disclosure.

In some optional embodiments, on the basis of any one of the foregoing embodiments, as shown in FIG. 11, the method in this embodiment of this disclosure further includes the following steps.

Step 610: The first controller in the first processing element monitors operating statuses of first read ports, and sends the operating statuses of the first read ports to the processor.

The operating status of each first read port includes an idle status and a working status.

Step 620: The processor determines the target read port from among the first read ports based on the operating statuses of the first read ports, and determines the first transmission control information based on read port identification information of the target read port.

In some optional embodiments, the first transmission control information includes read address control information. The first processing element further includes a corresponding read address generation module of each first read port. The method in the embodiments of this disclosure further includes: when any first read port serves as the target read port, the read address generation module corresponding to the target read port generates read address information based on the read address control information, and transmits the read address information to the target read port.

Step 5210 of reading data from the first memory by any first read port in the first processing element when serving as the target read port includes: the target read port reads data from the first memory based on the read address information.

In some optional embodiments, the first transmission control information includes destination device identification information.

Step 5220 of generating the first data packet by the first controller in the first processing element based on the data read by the target read port and the first transmission control information includes: the first controller generates the first data packet based on the data read by the target read port, the destination device identification information, source device identification information corresponding to the first processing element, and the read port identification information of the target read port.

FIG. 12 is a schematic flowchart of a data transmission method according to yet another exemplary embodiment of this disclosure.

In some optional embodiments, on the basis of any one of the foregoing embodiments, the second processing element includes a second memory, at least one first write port corresponding to the second memory, and a second controller.

As shown in FIG. 12, step 530 of storing, by the second processing element, at least a part of data in the first data packet based on the second transmission control information includes:

Step 5310: When serving as a target write port, any first write port in the second processing element writes at least a part of data in the first data packet into the second memory.

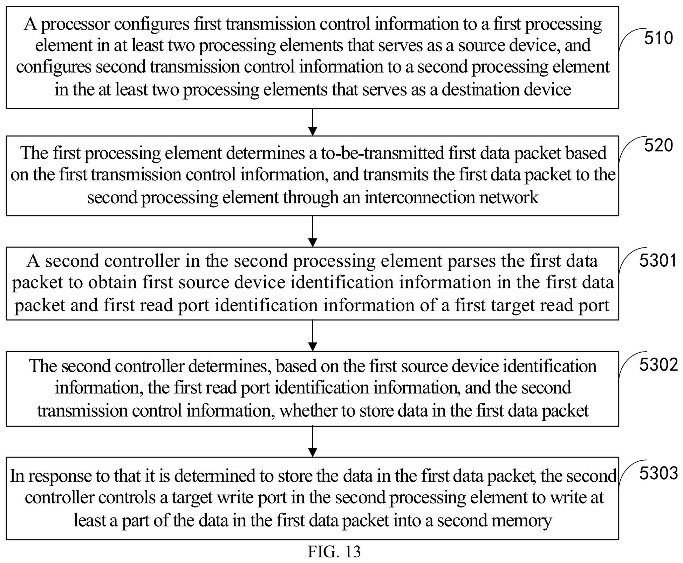

FIG. 13 is a schematic flowchart of a data transmission method according to still yet another exemplary embodiment of this disclosure.

In some optional embodiments, the second processing element further includes a second controller.

As shown in FIG. 13, step 530 of storing, by the second processing element, at least a part of data in the first data packet based on the second transmission control information includes:
Step 5301: the second controller in the second processing element parses the first data packet to obtain first read port identification information of a first target read port and first source device identification information in the first data packet;
Step 5302: the second controller determines, based on the first source device identification information, the first read port identification information, and the second transmission control information, whether to store the data in the first data packet; and
Step 5303: in response to that it is determined to store the data in the first data packet, the second controller controls the target write port in the second processing element to write at least a part of the data in the first data packet into the second memory.

In some optional embodiments, the second transmission control information includes second source device identification information and second read port identification information.

Step 5302 of determining whether to store the data in the first data packet by the second controller based on the first source device identification information, the first read port identification information, and the second transmission control information includes:
The second controller matches the first source device identification information and the first read port identification information with the second source device identification information and the second read port identification information, to determine whether to store the data in the first data packet based on a matching result.

In some optional embodiments, the method in the embodiments of this disclosure may further include: sending, by the second controller, abnormality prompt information to the processor in response to that the matching result is mismatching.

In some optional embodiments, the second transmission control information includes write address control information. The second processing element further includes a corresponding write address generation module of each first write port.

The method in the embodiments of this disclosure further includes: when any first write port serves as the target write port, the write address generation module corresponding to the target write port determines write address information based on the write address control information, and transmits the write address information to the target write port.

Step 5303 of, in response to that it is determined to store the data in the first data packet, controlling, by the second controller, the target write port in the second processing element to write at least a part of the data in the first data packet into the second memory includes:
transmitting, by the second controller, at least a part of the data in the first data packet to the target write port in a case where it is determined to store at least a part of the data in the first data packet. The target write port writes at least a part of the data in the first data packet into the second memory based on the write address information.

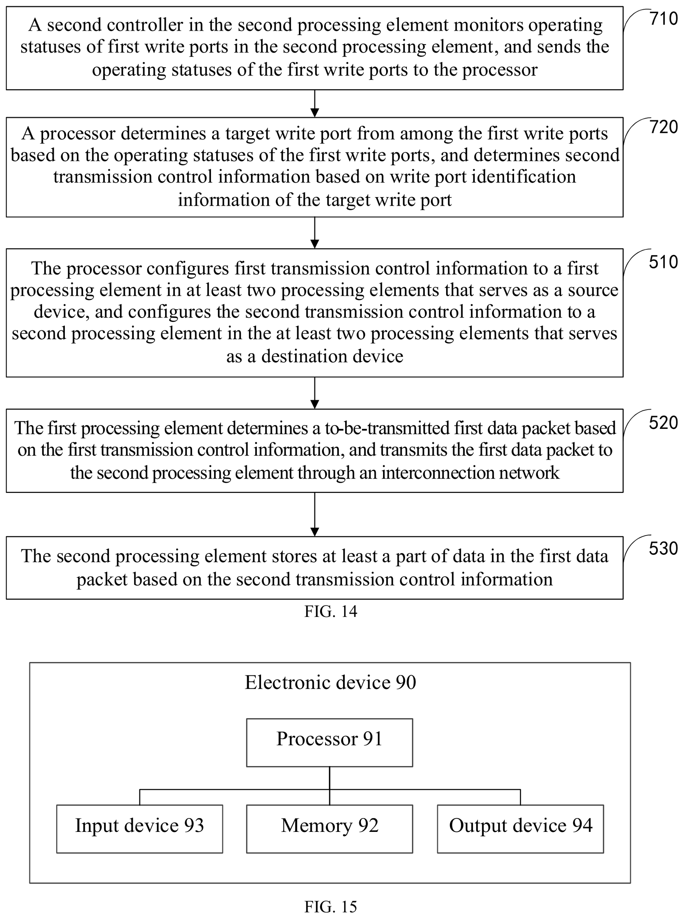

FIG. 14 is a schematic flowchart of a data transmission method according to a further exemplary embodiment of this disclosure.

In some optional embodiments, as shown in FIG. 14, the method in this embodiment of this disclosure may further include the following steps.

Step 710: The second controller in the second processing element monitors operating statuses of first write ports in the second processing element, and sends the operating statuses of the first write ports to the processor.

The operating status of each first write port includes an idle status and a working status.

Step 720: The processor determines the target write port from the first write ports based on the operating statuses of the first write ports, and determines the second transmission control information based on write port identification information of the target write port.

The foregoing embodiments of this disclosure may be implemented separately or in any combination without conflict. This may be specifically set according to actual requirements, and is not limited in this disclosure.

For beneficial technical effects corresponding to the exemplary embodiments of this method, reference may be made to the corresponding beneficial technical effects in the section of exemplary system described above, and details are not described herein again.

Any data transmission method provided in the embodiments of this disclosure may be implemented by any suitable electronic device with a data processing capability, including but not limited to a terminal device, a server, and other electronic devices. Alternatively, any data transmission method provided in the embodiments of this disclosure may be implemented by the processor. For example, the processor implements any data transmission method described in the embodiments of this disclosure by invoking corresponding instructions stored in the memory. Details are not described below.

### Exemplary electronic device

FIG. 15 is a diagram of a structure of an electronic device according to an embodiment of this disclosure. The electronic device includes at least one processor (which may be referred to as a second processor) 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 91 may execute the one or more program instructions to implement the method according to various embodiments of this disclosure that are described above and/or other desired functions.

In an example, the electronic device 90 may further include an input device 93 and an output device 94. These components are connected to each other through a bus system and/or another form of connection mechanism (not shown).

The input device 93 may further include a touch screen, a microphone, and various sensors.

The output device 94 may output various information to the outside, and may include, for example, a display, a speaker, a communication network, and a remote output device connected to the communication network.

Certainly, for simplicity, FIG. 15 shows only some of components in the electronic device 90 that are related to this disclosure, and components such as a bus and an input/output interface are omitted. In addition, according to specific application situations, the electronic device 90 may further include any other appropriate components.

In addition, an embodiment of this disclosure further provides a chip, which may include the data transmission system according to any one of the foregoing embodiments of this disclosure.

### Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A data transmission system, **characterized in that** the data transmission system comprises:
a processor (21); and
at least two processing elements, which are interconnected to form an interconnection network, wherein
the processor (21) is configured to configure first transmission control information to a first processing element (22i) in the at least two processing elements that serves as a source device, and configure second transmission control information to a second processing element (22j) in the at least two processing elements that serves as a destination device;
the first processing element (22i) is configured to: when serving as the source device, determine a to-be-transmitted first data packet based on the first transmission control information from the processor (21), and transmit the first data packet to the second processing element (22j) through the interconnection network; and
the second processing element (22j) is configured to: when serving as the destination device, store at least a part of data in the first data packet based on the second transmission control information from the processor (21).

2. The system according to claim 1, wherein the first processing element (22i) comprises:
a first memory (22i1), configured to store data;
at least one first read port (22i2K) corresponding to the first memory (22i1), each first read port (22i2K) being configured to read data from the first memory (22i1) when serving as a target read port; and
a first controller (22i3), configured to generate the first data packet based on the data read by the target read port and the first transmission control information, and transmit the first data packet to the second processing element (22j) through the interconnection network.

3. The system according to claim 2, wherein the first controller (22i3) is further configured to monitor an operating status of the first read port (22i2K) and send the operating status of the first read port (22i2K) to the processor (21), the operating status of each first read port (22i2K) comprising an idle status and a working status; and
the processor (21) is configured to determine the target read port from among the first read ports (22i2K) based on the operating status of the first read port (22i2K), determine the first transmission control information based on read port identification information of the target read port, and send the first transmission control information to the first processing element (22i).

4. The system according to claim 2, wherein the first transmission control information comprises read address control information;
the first processing element (22i) further comprises:
a read address generation module (22i4K) corresponding to each first read port (22i2K), wherein when the first read port (22i2K) serves as the target read port, the read address generation module (22i4K) corresponding to the target read port is configured to generate read address information based on the read address control information, and transmit the read address information to the target read port; and
the target read port is configured to read data from the first memory (22i1) based on the read address information.

5. The system according to claim 2, wherein the first transmission control information comprises destination device identification information; and
the first controller (22i3) is specifically configured to generate the first data packet based on the data read by the target read port, the destination device identification information, source device identification information corresponding to the first processing element (22i), and read port identification information of the target read port.

6. The system according to any one of claims 1 to 5, wherein the second processing element (22j) comprises:
a second memory (22j 1), configured to store data; and
at least one first write port (22j2S) corresponding to the second memory (22j 1), each first write port (22j2S) being configured to write at least a part of the data in the first data packet into the second memory (22j 1) when serving as a target write port.

7. The system according to claim 6, wherein the second processing element (22j) further comprises:
a second controller (22j3), configured to:
parse the first data packet to obtain first read port (22i2K) identification information of a first target read port and first source device identification information in the first data packet;
determine, based on the first source device identification information, the first read port (22i2K) identification information, and the second transmission control information, whether to store the data in the first data packet; and
in response to that it is determined to store the data in the first data packet, control the target write port to write at least a part of the data in the first data packet into the second memory (22j1).

8. The system according to claim 7, wherein the second transmission control information comprises second source device identification information and second read port identification information; and
the second controller (22j3) is configured to match the first source device identification information and the first read port (22i2K) identification information with the second source device identification information and the second read port identification information, to determine whether to store the data in the first data packet based on a matching result.

9. The system according to claim 8, wherein the second controller (22j3) is further configured to:
send abnormality prompt information to the processor (21) in response to that the matching result is mismatching.

10. The system according to claim 7, wherein the second transmission control information comprises write address control information;
the second processing element (22j) further comprises:
a corresponding write address generation module (22j4S) of each first write port (22j2S), wherein when the first write port (22j2S) serves as the target write port, the write address generation module (22j4S) corresponding to the target write port is configured to determine write address information based on the write address control information, and transmit the write address information to the target write port;
the second controller (22j3) is further configured to transmit at least a part of the data in the first data packet to the target write port in a case where it is determined to store at least a part of the data in the first data packet; and
the target write port is specifically configured to write at least a part of the data in the first data packet into the second memory (22j1) based on the write address information.

11. The system according to claim 7, wherein the second controller (22j3) is further configured to:
monitor a status of the first write port (22j2S) in the second processing element (22j) and send the status of the first write port (22j2S) to the processor (21), wherein the status of each first write port (22j2S) comprises an idle status and a working status; and
the processor (21) is configured to: determine the target write port from the first write port (22j2S) based on the status of the first write port (22j2S), determine the second transmission control information based on write port identification information of the target write port, and send the second transmission control information to the second processing element (22j).

12. A data transmission method, **characterized in that** the data transmission method comprises:
configuring (510), by a processor, first transmission control information to a first processing element in at least two processing elements that serves as a source device, and second transmission control information to a second processing element in the at least two processing elements that serves as a destination device, wherein the at least two processing elements are interconnected to form an interconnection network;
determining (520), by the first processing element, a to-be-transmitted first data packet based on the first transmission control information, and transmitting the first data packet to the second processing element through the interconnection network; and
storing (530), by the second processing element, at least a part of data in the first data packet based on the second transmission control information.

13. A computer readable storage medium, wherein the storage medium stores a computer program, and the computer program is executed by a processor to implement the method according to claim 12.

14. An electronic device, **characterized in that** the electronic device comprises:
a processor; and
a memory, configured to store processor-executable instructions, wherein
the processor is configured to read the executable instructions from the memory, and execute the instructions to implement the method according to claim 12; or
the electronic device comprises the data transmission system according to any one of claims 1 to 11.

15. A chip, **characterized in that** the chip comprises the data transmission system according to any one of claims 1 to 11.
